# EUROPEAN PATENT APPLICATION

(11) **EP 2 565 126 A1**
(43) Date of publication of application: **06.03.2013**
(21) Application number: 12182685.3
(22) Date of filing: 31.08.2012
(51) Int. Cl.: B65C 9/00, B67C 3/22

(54) **Operating machine**

(30) Priority: 02.09.2011 IT GE20110098
(71) Applicant: PROMEC S.R.L., 43010 Fontevivo (Parma) (IT)
(72) Inventor: Rocchi, Flavio, 43012 Fontanellato (PR) (IT); Pirondi, Alessandro, 43124 Parma (IT); Moroni, Fabrizio, 43015 Noceto (PR) (IT); Vettori, Matteo, 43123 Parma (IT)
(74) Representative: Karaghiosoff, Giorgio Alessandro

(57) **Abstract**

An operating machine composed of two parts, i.e. a first upper operating part (1) and a second support base part (2), the first operating part (1) comprising motorized operating units which perform workpiece processing movements, said first operating part (1) being supported by the second support base part (2).

The second support base part (2) and/or the first upper operating part (1) is composed of a plurality of modular lattice elements (21) that are joined together to form a three-dimensional lattice structure, each modular element (21) being formed of a plurality of tubular elements, which are joined together to form a polygonal frame.

Furthermore, the three-dimensional lattice structure is obtained by fixing one edge and/or side and/or vertex of a polygonal frame (21) to one edge and/or side and/or vertex of another of the polygonal frames (21).

## Description

The present invention relates to an operating machine composed of two parts, i.e. a first operating part and a second support base part. The first operating part comprises motorized operating units which perform workpiece processing movements and is supported by the second support base part.

Such structure is the typical configuration of any operating machine having operating units driven and supported by a lower base. The operating units may consist, for instance, of mechanical members adapted to perform certain operations in an assembly line, such as a rotating carousel for supporting a plurality of grippers, which are adapted to cooperate with a corresponding plurality of bottles, in bottling lines.

Regardless of the type of movement imparted by the operating units, i.e. either a translational movement or a rotary movement, the support base is required to have proper stress absorption and dissipation properties.

The entire structure is required to ensure high stability, for duly precise performance of all the operations carried out by the operating units, with the operation of the machine not being affected by the oscillations created by such movements.

In order to achieve such stability, prior art known bases are formed using structures adapted to obtain high rigidity which, in prior art devices, inevitably requires a large inertial mass for assisting absorption of all the stresses generated by the movement of the operating units in the machine.

Particularly, the inertial mass has no direct relation to the absorption of stresses, which always exist during operation, but affords lower resonance frequency values, by actually filtering off the higher harmonics, thereby avoiding the creation of stresses other than normal operation stresses.

Nevertheless, this solution involves the use of highly bulky structures, which are also poorly cost-effective, because they require the use of a large amount of material.

Furthermore, a high weight causes difficulties in displacing the machine in combination with the base, and such displacement is often required, especially in stand-alone machines in automated manufacturing lines.

A structure with a large inertial mass is often composed of parts having a special conformation, and anyway with a one-piece bulky construction, which also involves inconvenient and uneconomical transportation, storage and processing of these parts.

Therefore, there is the need of providing a base that, in addition to solving the problems of prior art bases, optimizes the amount and distribution of the material of which it is made, to avoid unnecessary costs, provides high adaptability to the various types of the operating units with which such base is to be combined, and has an easily inspectable structure, for operation, maintenance and cleaning, both of the entire machine and the base.

The present invention achieves the above purposes by relatively simple and inexpensive arrangements, i.e. by providing an operating machine as described hereinbefore, in which the second support base part is composed of a plurality of modular lattice elements, that are or can be joined together to form a three-dimensional lattice structure.

Each modular element is formed of a plurality of tubular elements joined together to form a polygonal frame, the three-dimensional lattice structure being obtained by fixing one edge and/or side and/or vertex of a polygonal frame to one edge and/or side and/or vertex of another of the polygonal frames.

This will provide a structure that both has a light weight relative to rigidity, and optimizes the distribution and amount of the material used for manufacturing the support base.

Therefore, a reduced mass as compared with prior art machines was found to provide a much stiffer structure, affording lower vibration levels than in similar conventional structures, and hence reduced displacements, oscillations or deformations of the operating machine during operation, caused by vibrations.

It should be noted that any further improvement described hereinafter mainly has the purpose of meeting special requirements, which allow improvement of stability and stiffness properties of the structure of the base provided in combination with the operating machine of the present invention.

Such requirements are mainly dictated by needs arising during common operation of each operating machine, such as those discussed above, concerning the bulk of the operating machine, i.e. the space required for carrying out operations, the amount of material, i.e. the volume of the material in use and its costs, the stiffness, i.e. the structural strength of the base.

In addition to the above, assembling requirements may be also encountered, i.e. easy assembly of the structure and the associated costs, hygiene, which requires cleaning and inspectability of the machine, easy manufacture and processing of the parts that form the structure, and the associated costs, and the adaptability of the base to different operating machines.

As a result, all the improvements that will be described below have the purpose of improving the structure, particularly in response to the above requirements.

It shall be further noted that the use of bearing lattice structures, formerly mainly designed for static operation, in operating machines subjected to mechanical stresses often caused by repetitive or cyclic movements, possibly oscillations and vibrations, of the operating units, is not obvious. While integral structures having large inertial masses provide absorption and attenuation of the vibrations and oscillations induced by the operating units during their treatment processes, and avoid the occurrence of resonance, lattice structures do not have this inherent function and are potentially subjected to resonance, under vibration and oscillation stresses.

An appropriate choice of a lattice frame construction leads to further advantages that synergistically add to the solution of the problems associated with prior art bases.

According to a first improvement, each of the polygonal frames preferably has the same shape and/or the same number of edges and/or sides and/or vertices.

Particularly, each of the polygonal frames is geometrically similar to the rest of said polygonal frames, i.e. each of the polygonal frames is scaled to the sizes of the rest of the polygonal frames.

Due to the possibility of manufacturing similar, or even identical parts, easy assembly and simple fabrication of the structure will be afforded, and costs will be accordingly reduced.

As an alternative, polygonal frames of different shapes may be provided, still in view of optimizing the response to the above requirements.

In a preferred embodiment, each of the polygonal frames consists of a triangular frame, which triangular frame has a base tubular element connected at its ends to two respective inclined tubular elements joined together at a corresponding vertex.

The triangular shape can be obtained and replicated in a simple manner, which first allows a frame to be formed by joining a few elements, and then facilitates assembly of different frames, while maintaining a small size.

In one improvement, an equilateral or isosceles triangular shape is used.

Based on the considerations and advantages afforded by the triangular frame in the achievement of the above purposes, in a variant embodiment the support base is composed of two three-dimensional lattice structures, i.e. a lower lattice structure and an upper lattice structure, both formed of a plurality of triangular frames joined together by their base vertices.

Therefore, multiple triangular frames are joined together by their base vertices, such that each lattice structure has a polygonal base consisting of the joined base tubular elements of each triangular frame and has posts consisting of the inclined tubular elements of each triangular frame.

The two lattice structures are joined such that the polygonal bases of each structure are arranged at opposite sides of said support base, in the vertical direction, with reference to the vertical center axis thereof.

As a result, in addition to the advantage of that the base structure may be broken up into various triangular modular elements, this structure is divided into two geometrically similar subunits, that are coupled together to provide a structure having bases on the opposite sides, thereby improving stability and allowing optimal stress discharge through the posts.

Furthermore the division into two structures facilitates assembly and mounting, as the two lattice structures may be assembled separately and later joined together, which further facilitates any required maintenance and any correction to be made during assembly.

In an improvement, the two lattice structures are fixed together so that the two polygonal bases are on parallel planes, and are rotated relative to each other with respect to the vertical center axis of the support base.

Particularly, the two lattice structures are fixed together such that the vertices of the polygonal base of the upper lattice structure are connected to corresponding joined vertices of the inclined tubular elements of the lower lattice structure, while maintaining the polygonal bases at the opposite sides of the support base, in the vertical direction, with reference to the vertical center axis thereof.

Any offset, or rotation of one polygonal base relative to the other increases the efficiency of the structure as it changes its vibrational behavior and affords improved discharge and absorption of the stresses created by the movement of the operating units of the operating machine of the present invention.

Furthermore, in order to increase the rigidity of the base, the joined vertices of the oblique tubular elements of the upper lattice structure are preferably joined together by means of a plate.

Particularly, the triangular frames that form the upper lattice structure have the joined vertices of their respective oblique tubular elements, such that such vertices converge toward the plate.

According to a further characteristic, the two polygonal bases of the lower lattice structure and the upper lattice structure preferably have scaled sizes, i.e. have the same geometrical shape.

Therefore, the entire base is composed of two similar lattice structures assembled together, with the upper one having posts converging toward a plate that joins the vertices of the posts, thereby increasing the rigidity of the whole structure, without wasting too much material for plate construction, due to the convergence of these posts.

Tests on the machine of the present invention, and particularly a modal analysis of the base, showed that the above described shape optimizes the response to the above mentioned requirements, such as the amount and distribution of material and the reduction of manufacturing costs, while improving assembly, and achieving optimal stability and stiffness of the structure.

These requirements are better fulfilled by an embodiment in which both lattice structures are composed of four triangular frames such that the bases of each of the two lattice structures have a rectangular, particularly square shape.

In an exemplary embodiment, the joined vertices of the oblique tubular elements of the lower lattice structure, and the joined vertices of the oblique tubular elements of the upper lattice structure are oriented in opposite and converging directions, such that the plate is interposed between the lower lattice structure and the upper lattice structure.

Otherwise, the joined vertices of the oblique tubular elements of the lower lattice structure, and the joined vertices of the oblique tubular elements of the upper lattice structure are oriented in the same direction, such that the plate is located above the upper lattice structure. This will improve access to the structure.

As a further alternative, a single lattice structure of appropriate size may be provided.

Once the embodiment that better fulfills the above requirements is found, improvements may be provided concerning the shape and position of the individual tubular elements that form the triangular frames.

A square section is thus preferred for the tubular elements, as it improves resistance of the entire base as compared with a round section.

Different requirements, such as easy cleaning of the machine, may involve the use of tubular elements with sections other than a square section, e.g. a round section, which are all part of the operating machine of the present invention.

Furthermore, different types of tubular elements may be provided for the different operating units in the operating machine of the present invention, with those having a larger section placed at locations more subjected to stresses, for improved dissipation of such stresses.

Also, the various frames that form the three-dimensional lattice structure may be joined using any prior art fixation method.

The same applies to the fixation of each tubular element to form the various polygonal frames.

Nevertheless, for improved rigidity of the system, fixation of the various tubular elements preferably occurs by welding whereas, in a particular embodiment, the polygonal frames that form the lattice structure are joined together by bonding using a structural adhesive.

Nevertheless, any type of fixation may be used, and particularly welding and bonding may be provided individually or in combination, either for fixation of each tubular element in the same polygonal fame, or for fixation of two different polygonal frames.

A bonding system that uses a structural element is preferred to a welding system, because this limits the provision of welded areas, which are more prone to chemical contamination, and this aspect is particularly important for food production lines.

Welded areas often cause rusting, and to avoid this, welds shall be smoothed and passivated, which processes require long times and increased costs.

Furthermore, the use of a bonding system for fixation can remove material tensions formed during welding, which cause deformations.

Finally, the bonding system also provides advantages in terms of processing times, which are shorter than those required by welding.

Preferably, the adhesive is selected according to desired viscosity, set time, degradation in a moist and aggressive environment and open time, i.e. the time between application of the adhesive and gelling, i.e. when it becomes difficult to spread.

The adhesive shall be selected according to construction requirements, in view of the above considerations.

For example, an adhesive that meets such requirements, selected from the Henkel range, is Hysol 3425, a two-component epoxy adhesive having 2h open time and 4h set time, which reaches 95% resistance in 72h at 25°C.

As described below, geometric reinforcements are preferred and used, for effective distribution and use of the material.

Particularly, the polygonal frames are joined together using fixing joints having interface surfaces adapted to interact with the sections of said tubular elements.

According to an improvement, the interface surfaces overlap the inner or outer surfaces of the end sections of the tubular elements to be joined together, such that contact surfaces are formed between the joint and the tubular element, with an adhesive layer being applied between such contact surfaces.

In an advantageous embodiment, the fixing joints are composed of a first stationary part and a second movable part, where the first stationary part consists of at least two interconnected surfaces, each surface being designed to contact the section of the tubular member, and having an aperture at the section, that has the same size as such section.

Alternatively, the second part may consist of at least two box-like elements whose section allows them to be fitted into the aperture and into the section of the tubular elements, the box-like elements having an abutment surface for abutment against the surface of the first part of the fixing joint.

Here, the adhesive material is placed between the outer shell surface of the box-like element and the inner surface of the tubular element.

This configuration provides the fixing joints with a continuous outer surface, during coupling of the individual polygonal frames, with no areas being created subjected to deposits of dust or external agents that could contaminate the product, still in the food production line application.

The above embodiments of the fixing joints shall be intended without limitation, as an example of possible joints.

Irrespective of the embodiments of the fixing joints as described herein, this patent application relates to a base that has fixing joints with a mixed fixation system, i.e. where the parts of the system are fixed by a combination of at least some of the different prior art fixation arrangements.

For example, a mixed system might be provided, which uses bonding for certain parts and interlocking systems for other parts, or uses pins and/or screws or form fits between such parts.

In a first embodiment, the fixing joints connect the end of a first tubular element to the end of a second tubular element through a connection element, that is connected by its two end sides to the first tubular element and the second tubular element.

The connection element has a fixing member for connection of at least one third tubular member, such that said third tubular element is moved relative to the first (215) and second tubular elements with at least one degree of freedom.

In a possible embodiment, the fixing joints connect the end of a first tubular element to the end of a second tubular element through a connection element, that is connected by its two end sides to the first tubular element and the second tubular element by means of a first fixing member and a second fixing member respectively.

In this configuration, at least the first or second fixing member allows connection of a third tubular member, such that the third tubular element is moved relative to the first and second tubular elements with at least one degree of freedom.

As explained in greater detail below, tubular elements and elongate connection elements will preferably have a circular section, both for simple construction and assembly and for easy cleaning of the various parts.

Preferably, the first fixing member is composed of at least two half-collars, which are clamped together to form an inner clamping surface for fixing an end side of the connection element to the end of a first tubular element, whereas the second fixing member is composed of two jaws, which are clamped together to form an inner clamping surface for fixing an end side of the connection element to the end of a second tubular element.

The two clamped jaws form a hemispherical seat for facilitated reception of a spherical head, which may preferably be connected by bonding to the third tubular element.

Alternatively, the first fixing member is composed of at least two half-collars, which are clamped together to form an inner clamping surface for fixing an end side of the connection element to the end of a first tubular element, whereas the second fixing member is composed of two jaws, which are clamped together to form an inner clamping surface for fixing an end side of the connection element to the end of a second tubular element.

In this case, each jaw extends in the vertical direction such that, in the clamped state, the two jaws form a seat for a head element connected by bonding to the third tubular element, the head element and the jaws having a hole for receiving a pin and/or a screw, to prevent any translational motion relative to said two jaws.

As mentioned above, any prior art fixation method may be used, e.g. involving the use of half-collars, and/or the jaws may be fixed to the ends of these tubular elements by bonding, or simply by using screws or pins, for coupling the jaws and the half-collars.

Particularly, in the above configurations, the combined effect of the bonding force and pressure imparts high stiffness to the system without requiring welds that would cause heating deformations, which would in turn involve processing costs for actions aimed at restoring the flatness of the base, as well as labor costs for welding.

Alternatively, the support base of the operating machine of the present invention may be formed with a three-dimensional lattice structure composed of a central part and a peripheral part.

The central part is formed as a tower by arranging a plurality of modular elements side by side, which modular elements have a lattice form. Each modular element consists of two elongate elements arranged in parallel and spaced relationship along the vertical center axis of the base, at least one connection element being provided for connecting the two elongate elements (311), said modular elements being placed side-by-side along said elongate elements.

On the other hand, the peripheral part is formed of at least one stabilizing module consisting of a trapezoidal element extending outwards relative to the central part.

As explained in detail in the description of a few exemplary embodiments, this configuration imparts high stability to the entire base, while ensuring extensive adaptability to the various operating machines provided in combination with such base, due to the high modularity of the lattice elements.

In one embodiment, the first upper operating part of the operating machine of the present invention has at least one operating unit or more operating units that can be displaced along a closed annular path having a preferably vertical axis.

The first upper part of the operating machine of the present invention may be composed of one or more operating units of any type known in the art.

Irrespective of the type of operating units, the operating machine of the present invention has the at least one operating unit in the first operating part placed on a corresponding support element.

This support element may be formed according to one or more of the above described characteristics of the support base.

In a preferred embodiment, the operating machine is a rotary machine for bottling lines, such as a rinser, a sterilizer, a bottle filler or the like, which is composed of two parts, i.e. a first upper operating part and a support base. The first upper part comprises a rotating carousel for supporting a plurality of grippers which are adapted to cooperate with a corresponding plurality of bottles, which rotating support carousel is driven by at least one electric motor through at least one fifth wheel so that said support carousel performs a rotary motion about its vertical center axis.

This first support part is also supported by the support base, which preferably has one or more of the above described characteristics.

Particularly, sterilizing machines are commonly used in aseptic bottling lines, particularly for reducing the bacterial count of bottles before filling, which occurs with the product at ambient temperature, and provides no bottle sterilization, unlike the hot filling technique. Aseptic filling is used for products that are required to keep better color and organoleptic properties, as cold filling reduces Maillard reaction and degradation of thermolabile substances.

Thus, the characteristics that can prevent contamination and deposition of foreign agents on the above described base structure are critical.

The above described type of operating unit has been mentioned by way of example only, although the above technology shall not be obviously intended to be restricted to rinsing, sterilizing or filling machines, and can be used on any operating unit that requires a support base, in bottling lines or in any other industry. Examples are robots of any kind, palletizers, etc.

Furthermore, the lattice structure of the base is preferably entirely made of stainless steel.

The present invention also relates to an operating machine composed of two parts, i.e. a first operating part and a second support base part.

The first operating part comprises at least one motorized operating unit which performs workpiece processing movements and is supported by the second support base part.

The support base consists of a support frame comprising at least two columns joined together by a superstructure.

The first operating part is supported by the second support base part so that the first operating part hangs from the support frame, particularly from the superstructure.

In this configuration, the operating unit is connected below the superstructure and affords easy access thereto.

Furthermore, a highly stiff structure is provided, especially concerning the very small amount of material it uses, and its particular shape imparts high stability and prevents overturning.

This configuration is also particularly adapted for use in combination with any type of prior art first operating part.

Here again, the support frame may be formed with the structural and construction characteristics as described concerning one or more of the general or specific examples of the base.

The first operating part also comprises at least one workpiece processing member and at least one support frame for said member, which frame is stationary or movable relative to the base, the support base and/or the support frame of said member having the above described structural and construction characteristics of the base.

The use of the construction design of the base for the support frame will be obvious for the skilled person, once the general concept has been expressed.

The present invention also relates to a support base for operating machines, which is composed of a plurality of modular lattice elements that are or can be joined together to form a three-dimensional lattice structure, in which each modular element is formed of a plurality of tubular elements, which are joined together to form a polygonal frame.

Furthermore, the three-dimensional lattice structure is obtained by fixing one edge and/or side and/or vertex of a polygonal frame to one edge and/or side and/or vertex of another of the polygonal frames.

Preferably, fixation of the modular elements occurs by bonding, as described above.

Finally, the base of the present invention includes all the individual or combined characteristics as described above concerning the support base provided in combination with the operating machine, which is also covered by the present invention.

The present invention also relates to an operating machine composed of two parts, i.e. a first operating part and a second support base part.

The first operating part comprises at least one motorized operating unit which performs workpiece processing movements and is supported by the second base part.

The motorized operating unit comprises at least one workpiece processing member and at least one support frame for said member, which frame is stationary or movable relative to the base.

The frame is also formed according to one or more of the general characteristics and the special characteristics of one or more of the embodiments of the base as described above.

Furthermore, this configuration provides a lighter construction of the entire operating machine, and requires a lower driving power for moving the operating units, as compared with that required by prior art operating machines.

Thus, the driving part can have a smaller size, which will afford lower space requirements and costs.

In addition, the base may be also formed according to one or more of the general characteristics and the special characteristics of the embodiments of the base as described above.

The lighter weight and the greater stiffness imparted to the operating machine of the present invention by the base and/or the support frame so formed, affords reduced vibrations, as well as reduced displacements of the operating machine due to vibrations.

Alternatively, the framework of the operating machine may be mounted to a conventional, high-inertial mass frame and be supported thereby in stationary or moving fashion relative to such frame, according to the movements required for the designed processing steps of the operating machine.

These and other features and advantages of the invention will be more apparent from the following description of a few embodiments shown in the accompanying drawings, in which:
Fig. 1 shows a prior art operating machine;
Fig. 2 is a view of an embodiment of the inventive operating machine;
Figs. 3a to 3c are different views of the support base of the present invention;
Fig. 4 is a view of the base of a particular embodiment of the present invention, in which the fixing joints between the various polygonal frames have been highlighted;
Figs. 5a to 5d show certain details of the fixing joints;
Fig. 6 shows a further embodiment of the base of the present invention;
Figs. 7a to 7c show certain details of the base according to the variant of Fig. 6;
Fig. 8 shows a variant embodiment of the support base as shown in Fig. 6;
Figs. 9a to 9c show a possible variant embodiment of the operating machine of the present invention;
Figs. 10a to 10e show two possible embodiments of the fixing joints for fixing two or more of the tubular elements that form the base of the present invention;
Figs. 11a and 11b show the fixing joint of Figures 10a to 10e, when used in one embodiment of the base of the present invention;
Figs. 12a to 12d show a further embodiment of the fixing joint.

It shall be noted that the exemplary embodiments of the figures use as an operating machine, by way of example and without limitation, a rotary machine for bottling lines, such as a rinser, a sterilizer, a bottle filler or the like, although this limitation is provided for simplicity of disclosure of the inventive principle, the base being adapted to be used in any type of operating machine having similar problems concerning the generation of mechanical stresses, that are required to be discharged to the ground by the base.

Furthermore, as described above, the characteristics that will be explained hereinafter, concerning the base, can be also used for making the support element of the at least one operating unit of the first upper operating part. As shown by the figures, the base illustrated therein can be used in any operating machine, and is not limited to the one of the figures.

It will be further noted that a base with the characteristics as described below may be used for supporting any overlying structure or element.

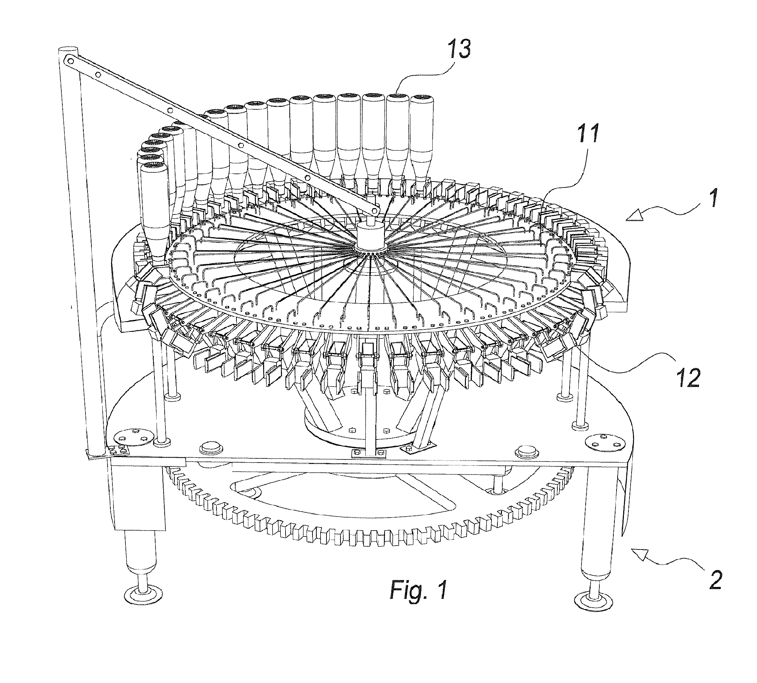

Particularly referring to Figure 1, a prior art rotary machine for bottling lines is shown, which is composed of two parts, a first upper operating part 1 and a support base 2, which first upper part 1 comprises a rotating carousel 11 for supporting a plurality of grippers 12 which are adapted to cooperate with a corresponding plurality of bottles 13.

The rotating support carousel 11 is driven by at least one electric motor through at least one fifth wheel, not shown in Figure 1, so that the support carousel 11 performs a rotary motion about its vertical center axis and is supported by the support base 2.

Generally, the support base 2 is characterized by a high inertia, to withstand the stresses caused by the movements of the overlying rotating carousel 11, whereby it must have a large size and a heavy weight, to achieve an increased stiffness.

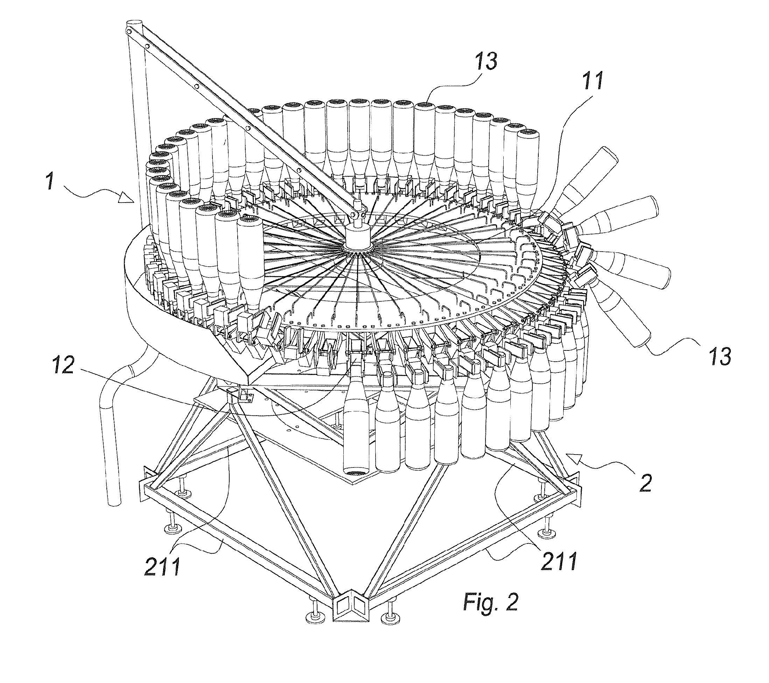

In Figure 2, the rotating carousel 11 is mounted to the support base 2 of the present invention.

Such support base 2 is composed of a plurality of modular lattice elements 21 which are or can be joined together to form a three-dimensional lattice structure.

Each modular element 21 is formed of a plurality of tubular elements 211, which are joined together to form a polygonal frame 21. Particularly, the three-dimensional lattice structure is obtained by fixing one edge and/or side and/or vertex of a polygonal frame 21 to one edge and/or side and/or vertex of another polygonal frame 21.

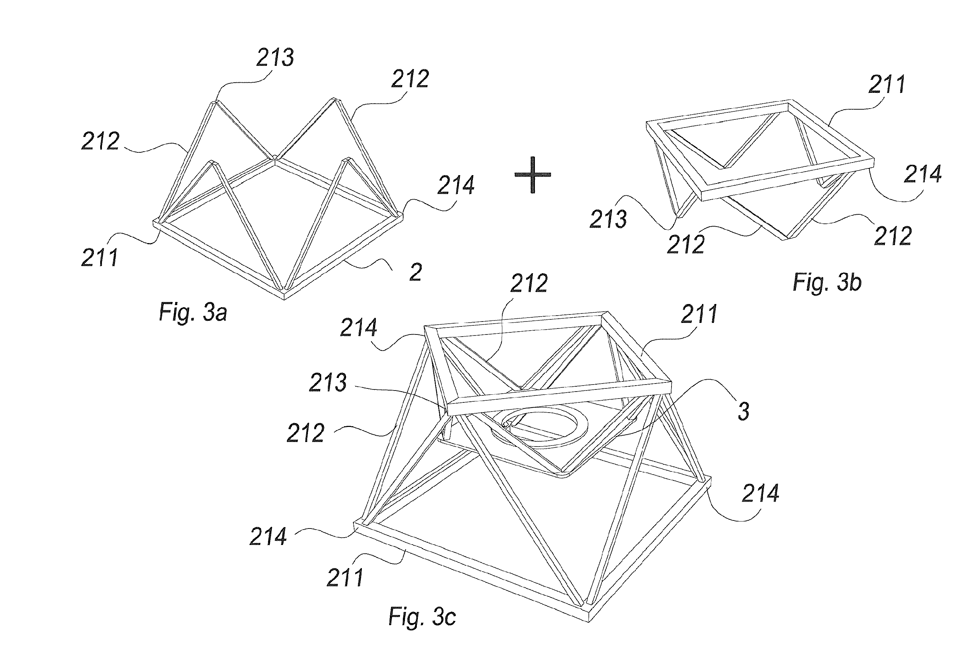

Particularly, the support base 2 of the present invention is shown, according to a preferred variant embodiment, in Figures 3a to 3c.

In this variant embodiment, the polygonal frames 21 have the same shape and/or the same number of edges and/or sides and/or vertices, thereby being geometrically similar, each polygonal frame 21 being scaled to the sizes of the rest of the polygonal frames 21.

The polygonal frame 21 as shown in Figures 3a to 3c has a triangular shape, and has a base tubular element 211 connected at its ends to two respective inclined tubular elements 212 joined together at a corresponding vertex 213.

Particularly, the base tubular element 211 is connected to the two inclined tubular elements 212 at corresponding vertices 214, but the inclined tubular elements 212 may be connected to the base tubular element 211 along its entire length.

For simplicity of description and illustration, the support base 2 of the figures is composed of 4 polygonal frames 21, which are joined together to form a square polygonal base, although this embodiment shall be intended without limitation, with any number of polygonal frames 21 being possibly joined together, without incurring any particular construction difficulty or obstacle preventing assembly.

The use of four polygonal frames 21 is an optimal response to the above requirements, as it effectively achieves the required rigidity and stress discharge purposes.

As a result, the support base 2 of Figure 3c is composed of two three-dimensional lattice structures, as shown in Figures 3a and 3b respectively, i.e. a lower lattice structure, Figure 3a, and an upper lattice structure, Figure 3b.

Each of these two lattice structures is formed of four triangular frames 21 joined together by their base vertices 214, so that each lattice structure has a polygonal base consisting of the joined base tubular elements 211 of each triangular frame 21 and has four posts consisting of the inclined tubular elements 212 of each triangular frame 21.

The two lattice structures being joined together so that the bases of each lattice structure are at opposite sides of the support base 2, in the vertical direction, with reference to the vertical center axis thereof.

Particularly, the two lattice structures of Figures 3a and 3b are joined together so that the two corresponding polygonal bases are on parallel planes, and are rotated relative to each other with respect to the vertical center axis of the support base 2.

Figure 3c shows the entire base 2 of the present invention, where the two lattice structures are fixed together so that the vertices 214 of the polygonal base of the lattice structure of Figure 3a are connected to corresponding joined vertices 213 of the inclined tubular elements 212 of the lattice structure of Figure 3b.

The polygonal bases of the two lattice structures are arranged in parallel relationship at opposite sides of said support base, in the vertical direction, with reference to the vertical center axis of said support base.

Therefore, the polygonal bases are rotated relative to each other and, considering the regular square shape of such polygonal bases, the rotation angle will be 45°.

As a result, since the inclined tubular elements 212 of the lower lattice structure of Figure 3a are preferably oriented perpendicular to their polygonal base, the upper polygonal base, i.e. the one that belongs to the lattice structure of Figure 3b, will be smaller than the lower polygonal base.

Particularly, Figure 3c shows a plate 3 which is adapted to increase the stiffness of the entire support base 2 by joining the vertices 213 of the oblique tubular elements 212 of the upper lattice structure.

Preferably, such vertices 213 converge toward the plate 3.

Particularly referring to the variant embodiment in which the operating machine is a rotary machine for bottling lines, such plate 3 may consist of a support plate for the fifth wheel that transfers the action of the electric motor to the rotating carousel 11.

The electric motor may be located in any position, either above or below the fifth wheel supporting plate 3.

In the variant embodiments of the figures, the tubular elements preferably have a square section, although common types of prior art profile may be provided.

According to construction requirements and to the type of operating units being used, the sections of the tubular elements may be modified, using different sections also within the same base.

Particularly, in Figure 3c the tubular elements 211 that form the lower polygonal base and the upper polygonal base have a larger section than the oblique tubular elements 212, to impart greater stiffness to the whole structure.

The triangular frames 21 are preferably joined together by bonding, using a similar structural adhesive.

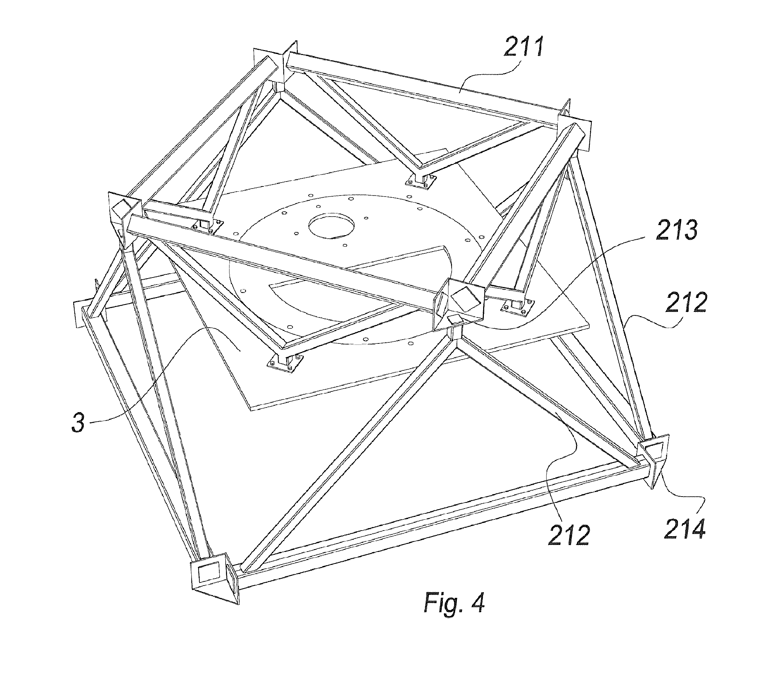

Figure 4 shows the triangular frames 21 joined together at their vertices 213 and 214 through fixing joints 4 that have interface surfaces adapted to interact with the sections of the tubular elements 211 and 212.

The fixing interfaces overlap the inner or outer surfaces of the end sections of the tubular elements 211 and 212, thereby creating contact surfaces for receiving the adhesive material therebetween.

The fixing joints 4 have as many interface surfaces as there are triangular frames 21 to be joined.

Fixing joints 4 are also provided for fixing the four vertices 213 of the upper lattice structure to the support plate 31 of the fifth wheel.

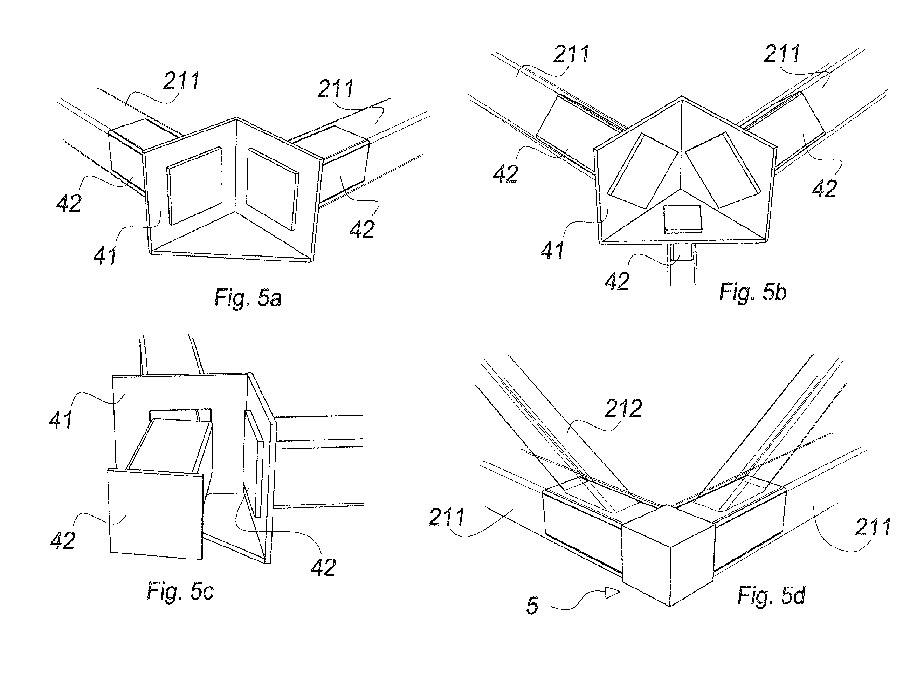

Figures 5a to 5d show various details of such fixing joints 3.

Such figures shall be intended by way of example only and do not limit in any manner the types of fixing joints that may be used for joining the polygonal frames and/or the tubular elements that form the operating machine of the present invention.

The fixing joints may be even unnecessary in particular exemplary embodiments, e.g. when welding is used for joining the tubular elements and/or between the polygonal frames formed thereby.

The fixing joints are composed of a first stationary part 41 and a second movable part 42.

The first stationary part 41 is composed of surfaces 411 that are connected together, each surface 411 being designed to be placed in contact with the section of the tubular element 211, and having an aperture at such section, having the same size as it.

The second part 42 consists of box-like elements whose section allows them to be fitted into the aperture of the surfaces 411 and into the section of the tubular elements 211 and 212, such box-like elements having an abutment surface for abutment against the surfaces 411.

Figure 5a shows a fixing joint for joining two tubular base elements 211 of the triangular frame 211, which joint has two interface surfaces for interfacing therewith, with 2 apertures for receiving the tubular element 211 of the box-like element 42, with the abutment head of the latter, abutting against the surface 411, being only shown in Figure 5a.

On the other hand, Figure 5b shows a fixing joint 4 for joining two base tubular elements 211 and the vertex 213 of the two inclined tubular elements 212, such joint hence having three interface surfaces 411.

Figure 5c shows the box-like element 42 once it has been inserted in the tubular element 211 and 211 through the aperture of the interface surface 411, such that the adhesive material may be interposed between the outer shell surface of the box-like element 42 and the inner surface of the tubular element 211 and 212.

Preferably, the interface surfaces of the joint are welded to the end part of the tubular elements 211 and 212, and the inclined tubular element 212 is also preferably welded to the base tubular element 211.

Figure 5d shows another possible type of fixing joints that may be used for joining the polygonal frames and/or the tubular elements belonging to the operating machine of the present invention.

In such type of joint, the first part 41 and the second part 42 are formed of one piece 5, preferably obtained by precision casting.

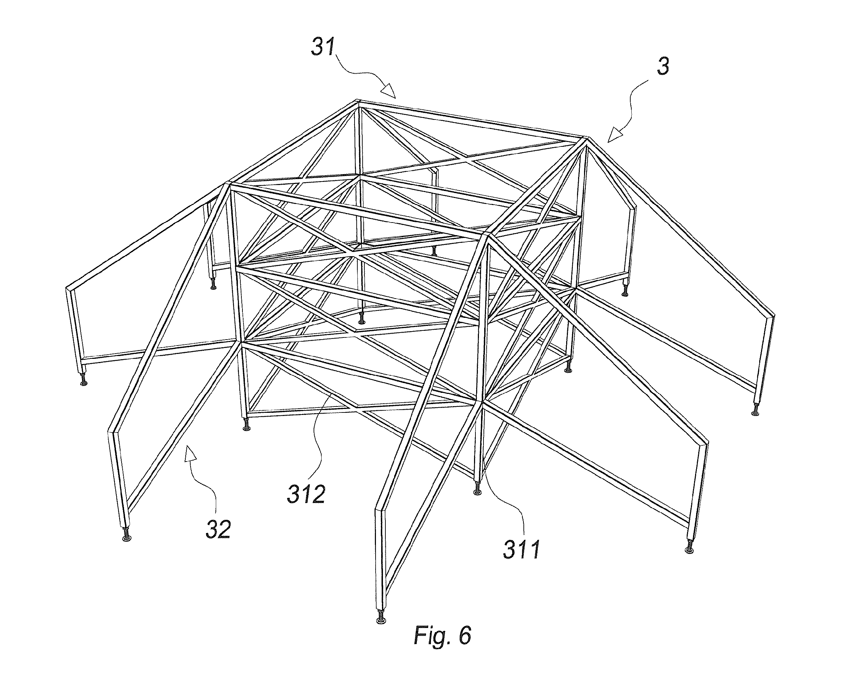

Figure 6, shows a variant embodiment of the support base 2 of the present invention.

In this variant embodiment, the three-dimensional lattice structure 3 consists of a central part 31 and a peripheral part 32.

The central part 31 is formed as a tower by arranging side by side a plurality of modular elements, which have a lattice form, i.e. each modular element consists of two elongate elements 311 arranged in parallel and spaced relation along the vertical center axis of the three-dimensional lattice structure 3, connection elements 312 being provided for connecting the two elongate elements 311.

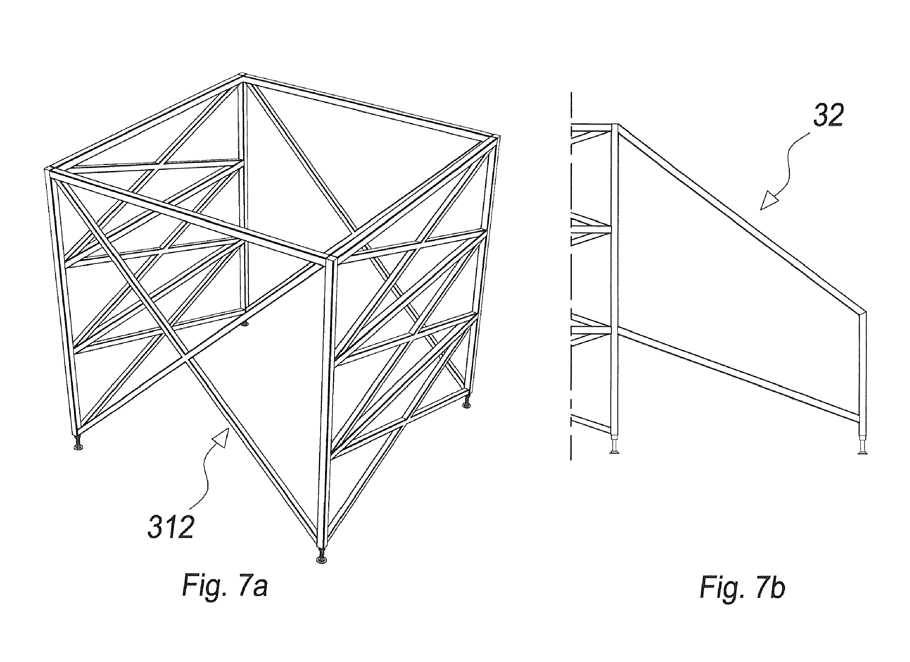

Figures 7a and 7b particularly show the central part 31 and the peripheral part 32 respectively.

For construction optimization and improved stiffness of the entire structure, the central part 31 is composed of 4 modular elements arranged side by side along their respective elongate elements 311.

Any number of connection elements 312 may be used, even different numbers, according to the modular element in the same structure. For example, in Figure 7a, the central part 31 is composed of 2 facing modular elements which have a large number of connection elements 312 and two further modular elements having a smaller number of connection elements 312 than the previous ones.

By this arrangement, a compromise is achieved in terms of stiffness of the structure, use of the material and inspectability of the three-dimensional lattice structure 3.

To avoid overturning, the central part 31 is joined to a given number of stabilizing modules 32, 8 modules in the illustrated example, i.e. two for each vertex of the central polygonal tower having a square base. The eight stabilizing modules 32 preferably consist of trapezoidal elements which extend outwards from the adjacent surfaces of the elongate elements 311.

A smaller number of modules may be also provided, with one module only being provided for each corner area, or even a larger number may be provided, possibly when the central tower has a triangular base or a polygonal base with more than four corners.

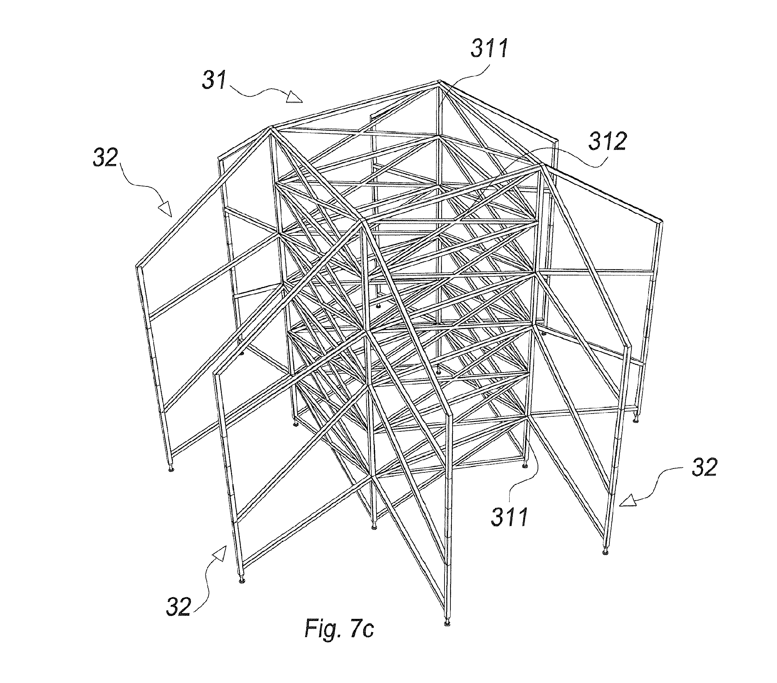

The above configuration is particularly advantageous, as it affords extensive height adjustment, due to the possibility of superimposing various central parts 31 and as many stabilizing modules 32, while maintaining the stability and stiffness of the system, as shown in Figure 7c.

In a further embodiment, the stabilizing modules may consist of simple tubular elements, each consisting of a single elongate element adapted to discharge part of the weight applied to the support base 2.

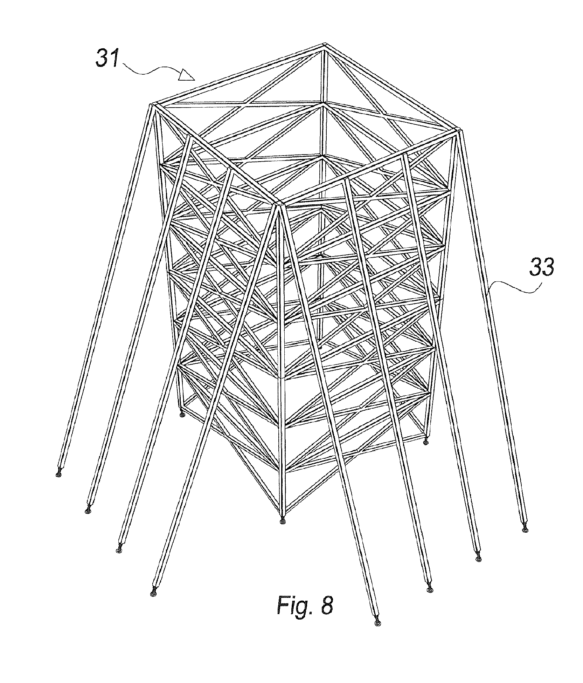

Such elongate elements may be provided in any shape, size and number: Figure 8 shows a possible embodiment, having a central part 31 as illustrated in Figure 6 and stabilizing modules 33 consisting of said elongate elements.

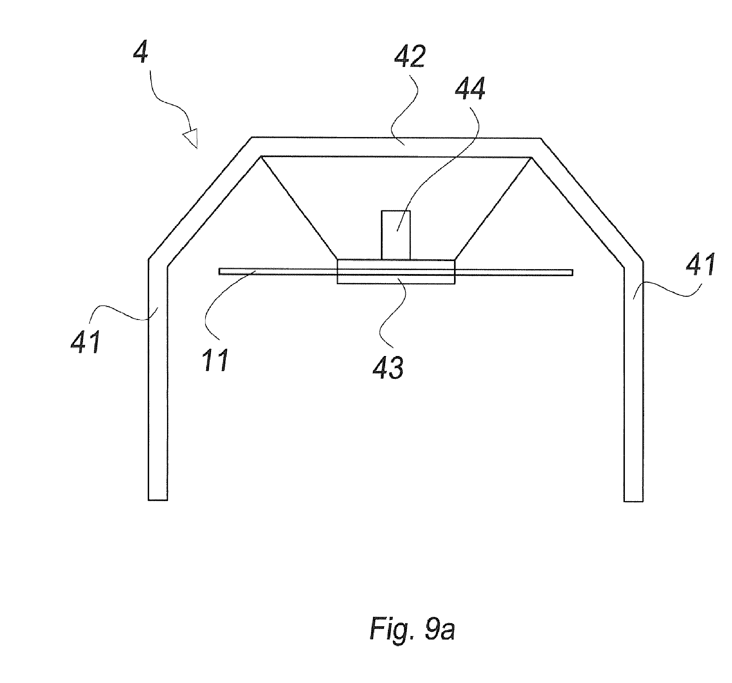

Figures 9a to 9c show a possible variant embodiment of the operating machine of the present invention.

Once again, for simplicity, the operating machine is embodied by a rotary machine for bottling lines, such as a rinser, a sterilizer or the like, with the operating part comprising a rotating carousel 11 driven by at least one electric motor 44, such that the support carousel 11 rotates about its own vertical center axis.

Such embodiment shall be intended by way of example only without limitation to the characteristics of the support base, that can be used in combination with any operating unit, as better explained hereinbelow.

In this embodiment, the support base 2 consists of a support frame 4 comprising at least two columns 41 joined together by a superstructure 42.

The carousel 11 is also supported by the second support base part, so that it hangs from the support frame 4, particularly from the superstructure 42.

The support frame 4 may be formed with the structural and construction characteristics as described concerning one or more of the general or specific examples of the base.

The use of the construction design of the base for the support frame will be obvious for the skilled person, once the general concept has been expressed.

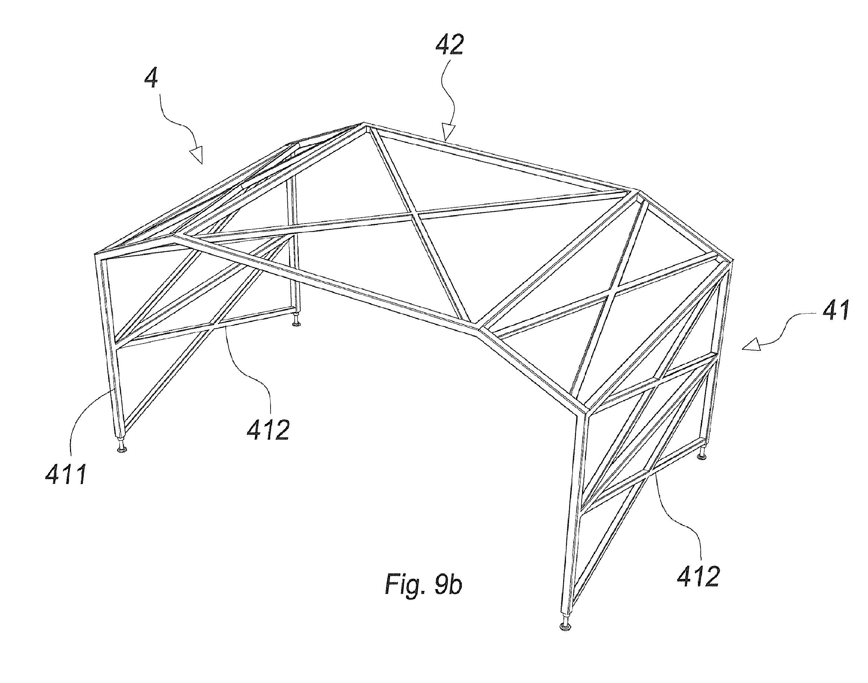

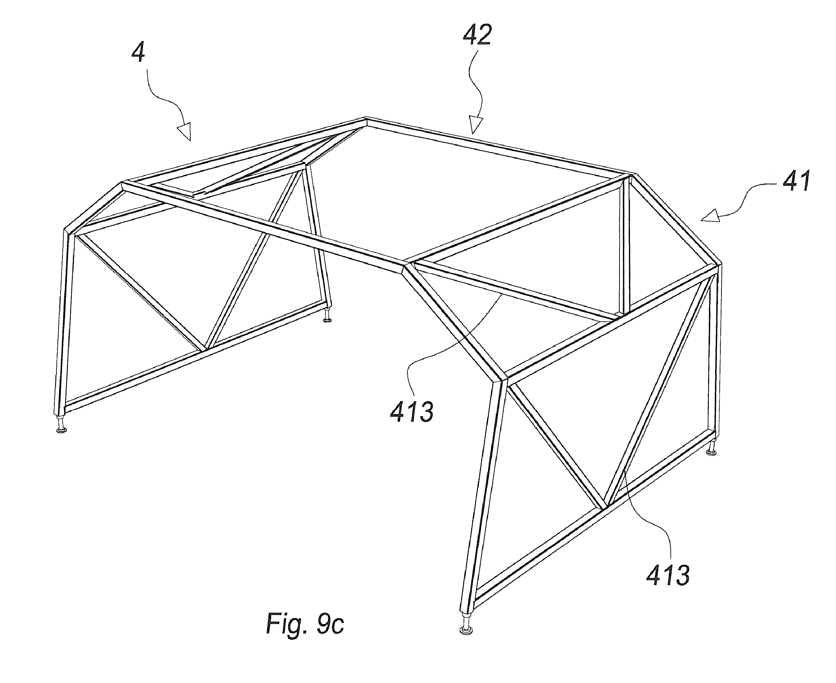

By way of example, Figures 9b and 9c show two perspective views of possible embodiments of the support frame 4, according to the above described characteristics.

In Figure 9b, the support frame 4, particularly the two columns 41 and the superstructure 42, is formed of lattice elements, i.e. modular elements consisting of two elongate elements 411 arranged in parallel relationship and interconnected by connection elements 412.

Figure 9b clearly shows that further embodiments may be also provided, using all the variants of the modular elements as described above, e.g. the various shapes of the polygonal frames, such as a polygonal rectangular frame, or a triangular frame as shown in Figure 9c, where the triangular frames consist of tubular elements 413 having the above described characteristics.

Various arrangements of polygonal frames may be obviously also provided to form the support frame 4, which arrangements will vary according to construction requirements, in view of the above mentioned stiffness and material saving needs.

Finally, a support frame 4 may have polygonal frames of different shapes therein.

As mentioned above, the construction of the base may also apply to the bearing framework of the operating units of the operating part. Referring to the figures that show a bottle rinsing machine, the latter comprises a carousel, which consists of a circular frame supported to rotate about its axis on the base, and is rotatably driven by a motor. The rotating frame of the carousel carries a plurality of operating units, which consist of bottle grippers, means for overturning and moving bottles to the nozzles that spray washing, rinsing and/or drying fluids, and means for overturning them back to the standing position. Here, according to the invention, the carousel frame is formed with the structural and construction characteristics as described concerning one or more of the general or specific examples of the base.

The use of the construction design of the base for the frame of the operating part or for structural support parts of said operating part will be obvious for the skilled person, once the general concept has been expressed.

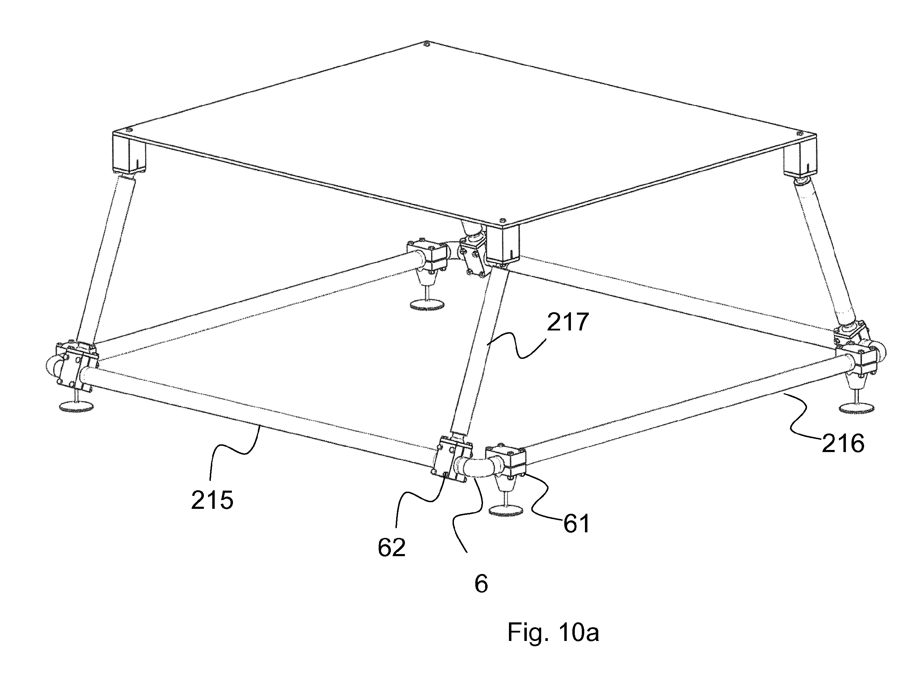

Irrespective of the construction of the base and the first operating part, Figures 10a to 10d show two different embodiments of the fixing joints that connect two or more tubular elements.

These embodiments relate to a mixed system of connections between tubular elements, which involves bonding and press-fit connections of the elements that form the fixing joints.

Particularly referring to Figures 10a to 10d, the fixing joints connect the end of a first tubular element 215 to the end of a second tubular element 216 through a connection element 6, that is connected by its two end sides to the first tubular element 215 and the second tubular element 216 by means of a first fixing member 61 and a second fixing member 62 respectively.

The connection element may have any section and shape, although it will preferably have a circular section and will be in the form of a corner tubular element, for easier connection of the first tubular element 215 and the second tubular element 216.

Also, the end sides of the connection element 6 may be designed to be fitted into the terminals of the first 215 and second 216 tubular elements, whereupon they will be fixed in position by the first 61 and second 62 fixing members.

Likewise, the terminals of the first 215 and second 216 tubular elements may be designed to be fitted into the end sides of the connection element 6.

Alternatively, the end sides of the connection element 6 may be formed with the same section sizes as the terminals of the tubular elements 215 and 216.

Here, an inner joint 63 will be preferably provided which has a slightly smaller section than the end side of the connection element 6 and/or the terminals of the tubular elements 215 and 216.

The inner joint 63 is fitted partly into the terminal of the tubular element 215 or 216, and partly into the end sides of the connection element 6, for the connection element 6 to be aligned with the tubular elements 215 and 216.

The inner joint 63 may have an intermediate flange 831, which is formed by radial enlargement of the joint, such intermediate flange having the same section as the tubular element and the connection element, so that, in the assembled state, such radial enlargement is flush with the outer wall of the tubular element and the connection element 6.

Preferably, an adhesive layer is provided between the outer surface of the inner joint 63 and the inner surface of the end sides and the tubular elements 215 and 216.

Furthermore, the first fixing member 61 and/or the second fixing member 62 allow connection of a third tubular member 217, such that the third tubular element 217 is moved relative to the first 215 and second 216 tubular elements with at least one degree of freedom.

Finally, bearing feet 7 of the base may be connected to the fixing members 61 and/or 62, as shown in Figures 10a to 10e.

Particularly, in Figures l0a and 10b a particular embodiment of the fixing joint is shown.

The fixing joint has the above described characteristics and, additionally, the first fixing member 61 is composed of two half-collars 611, which are clamped together to form an inner clamping surface for fixing an end side of the connection element 6 to the end of the first tubular element 215.

The second fixing member 62 is composed of two jaws 621, which are clamped together to form an inner clamping surface for fixing an end side of the connection element 6 to the end of the second tubular element 216.

The two clamped jaws 621 form a hemispherical seat for facilitated reception of a spherical head 622, which is preferably connected by bonding to the third tubular element 217.

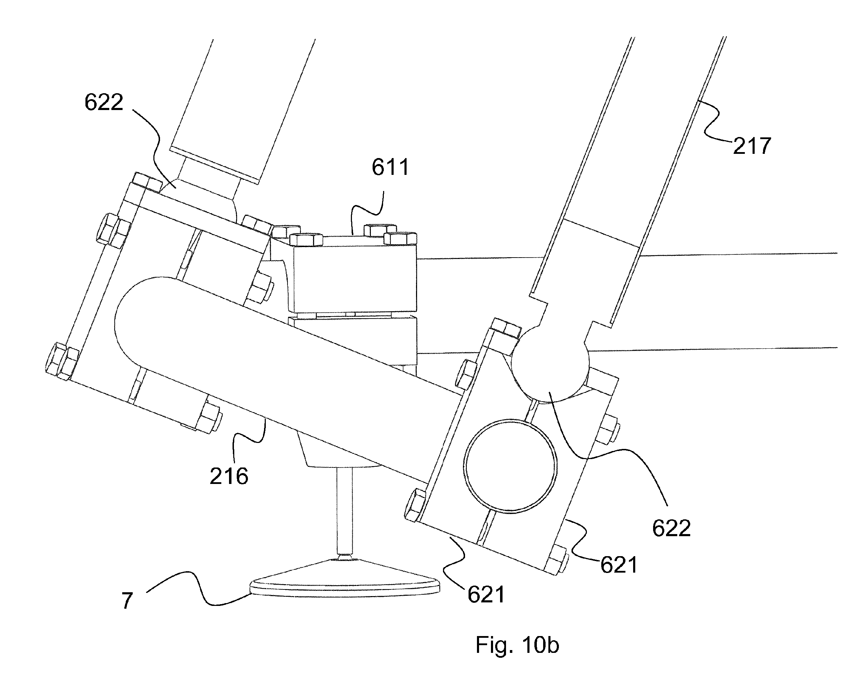

Figure 10b shows a detail of the second fixing member 2, in which the two jaws 621 are in a coupled state and form a seat consisting of a continuous surface having an angular amplitude of more than 180°, such that the spherical head 622 may be press-fitted into and held by the two jaws 621, i.e. the housing surface lies on the outer surface of the spherical head 622 beyond the maximum diameter area of the sphere.

The spherical head 622 is bonded to a terminal of the tubular element 217 as shown in the figure, and is rotatably accommodated to allow the third tubular element 217 to move relative to the tubular elements 215 and 216.

Once it has been press-fitted and adjusted according to the desired inclination of the third tubular element 217, lock means are preferably provided for locking the rotation of the spherical head 622.

Concerning the half-collars 611 and the jaws 621, any fastening means may be provided for coupling thereof, either of mechanical type such as by screws, or of chemical type, such as bonding.

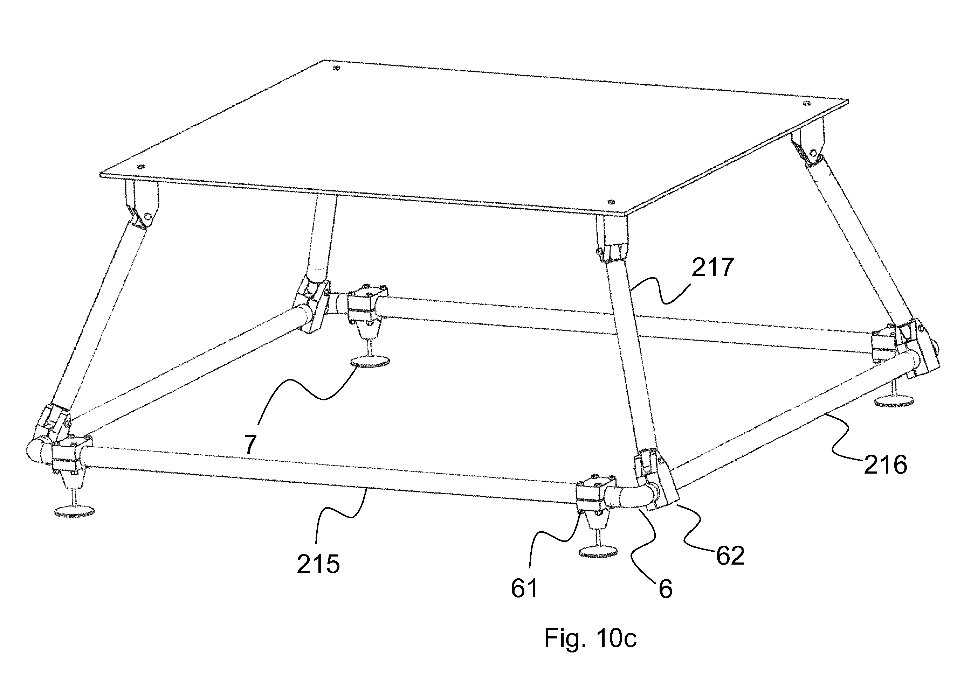

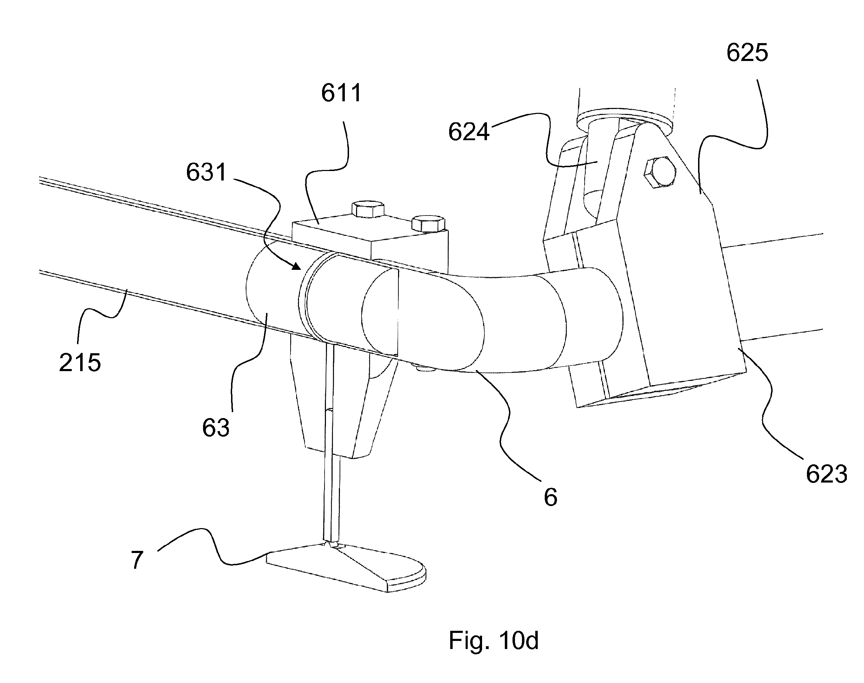

Figures 10c and 10d show a further embodiment of the fixing joint, where the first fixing member 61 is composed of two half-collars 611, which are clamped together to form an inner clamping surface for fixing an end side of the connection element 6 to the end of the first tubular element 215, in the same fashion as shown in Figures 10a and 10b.

The second fixing member 62 is composed of two jaws 623, which are clamped together to form an inner clamping surface for fixing an end side of the connection element 6 to the end of the second tubular element 216.

Each jaw 623 extends in the vertical direction such that, when said two jaws 623 are clamped together, they form a seat for receiving the end element 624 connected by bonding to the third tubular element 217.

Both the end element 624 and the jaws 623 include a hole 625, for receiving a pin and a screw which are designed to hold the end element 624 in the seat formed by the two jaws 623.

The pin prevents any translational motion of the end element 623, but allows rotation thereof about the axis of the pin, thereby allowing the tubular element 217 to move relative to the tubular elements 215 and 216.

Likewise, the screw also prevents any translational motion of the end element 623 and allows rotation thereof about the axis of the screw, but due to the provision of threads in the holes 625, it allows the end element 623 to be locked in its position once the screw has been tightened in the holes 625.

Preferably, particularly referring to Figure 10d, the end element 623 is bonded to a terminal of the third tubular element 217 and the half-collars 611 are also bonded to retain the end side of the connection element and the terminal of the tubular element 215.

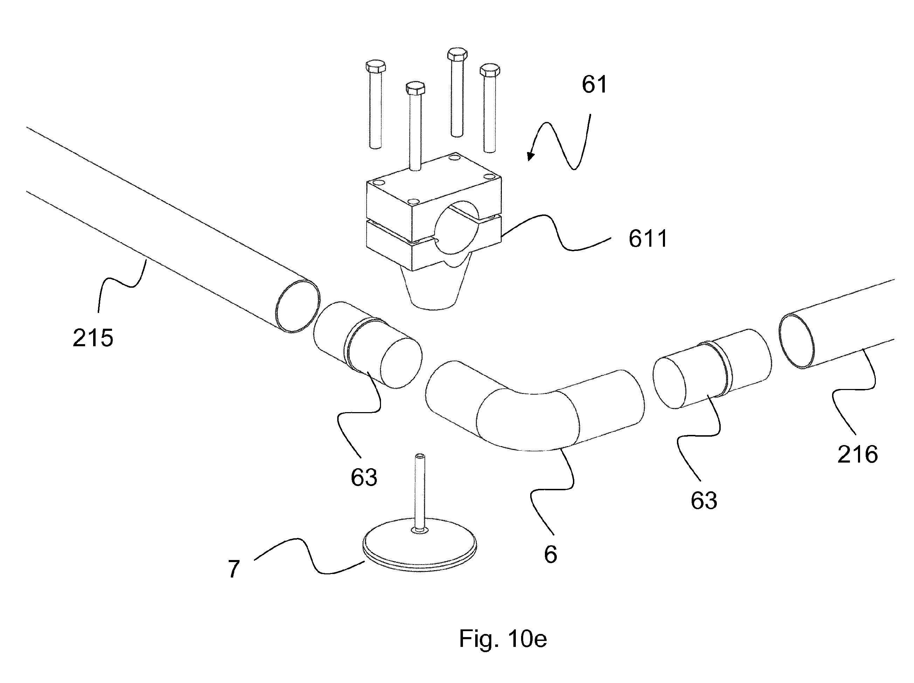

Figure 10e is an exploded view of the fixing joint, that shows the inner joint 63 inserted between the end sides of the connection element 6 and the first 215 and second 216 tubular elements.

The figure also shows the first fixing member 61, which is composed of two half-collars 611 coupled together by fastening pins and later joined to the foot 7.

The above figures clearly show that any prior art method may be used to fasten the parts together.

For instance, an adhesive may be used both to fasten the inner joint 63 to the tubular elements 215 and 216 and to join the half-collars 611 together and/or fasten them to the tubular elements.

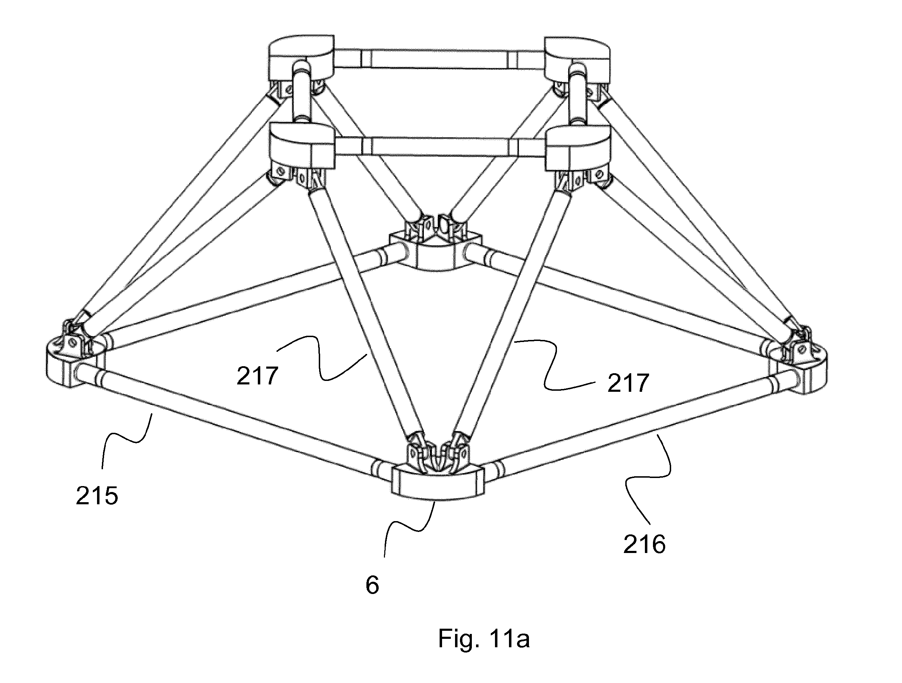

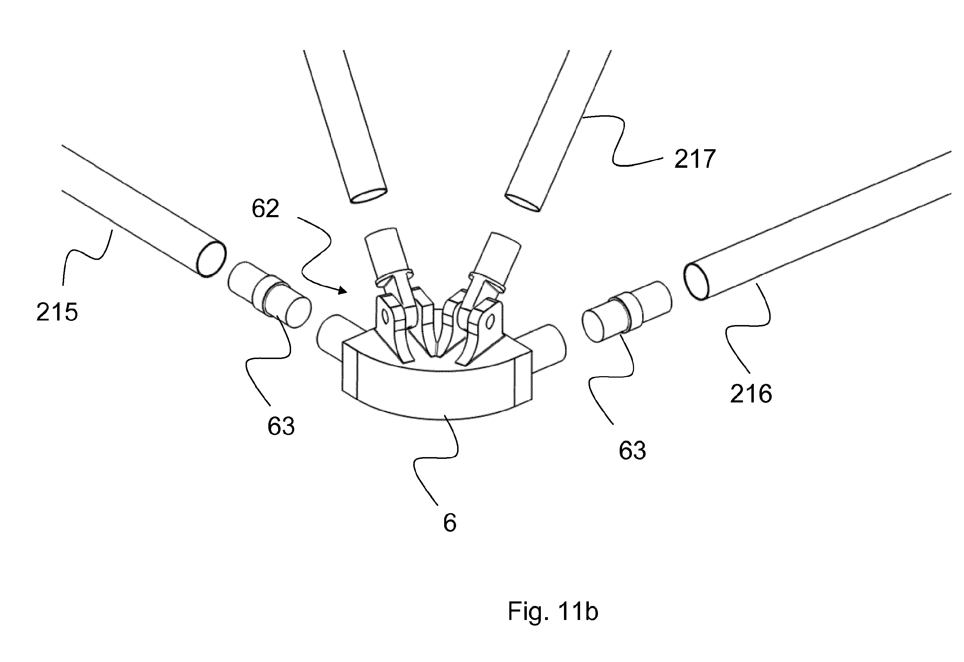

Figures 11a and 11b show that the above fixing joint may be used to join the various tubular elements by providing a variant embodiment of the base of the present invention, as described above.

In these figures, the fixing joints 4 connect the end of a first tubular element 215 to the end of a second tubular element 216 through a connection element 6, that is connected by its two end sides to the first tubular element and the second tubular element.

The connection element 6 has a fixing member 62 for connecting at least one third tubular element 217, here two.

As described above with reference to Figure 10d, each tubular element 217 moves relative to the first 215 and second 216 tubular elements.

Figure 10b is an exploded view of the fixing joint 4, which especially shows the use of the inner joint 63 for connecting the tubular elements 215 and 216 to the end sides of the connection element 6.

The above described characteristics concerning the fixing joints and the various types of fixation of the various components also apply to this variant embodiment.

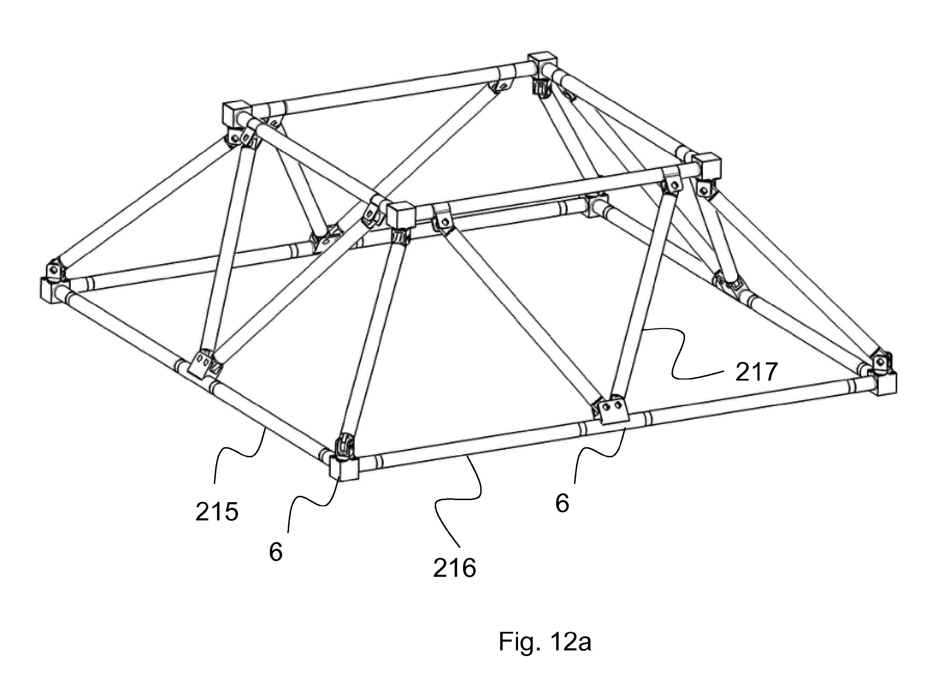

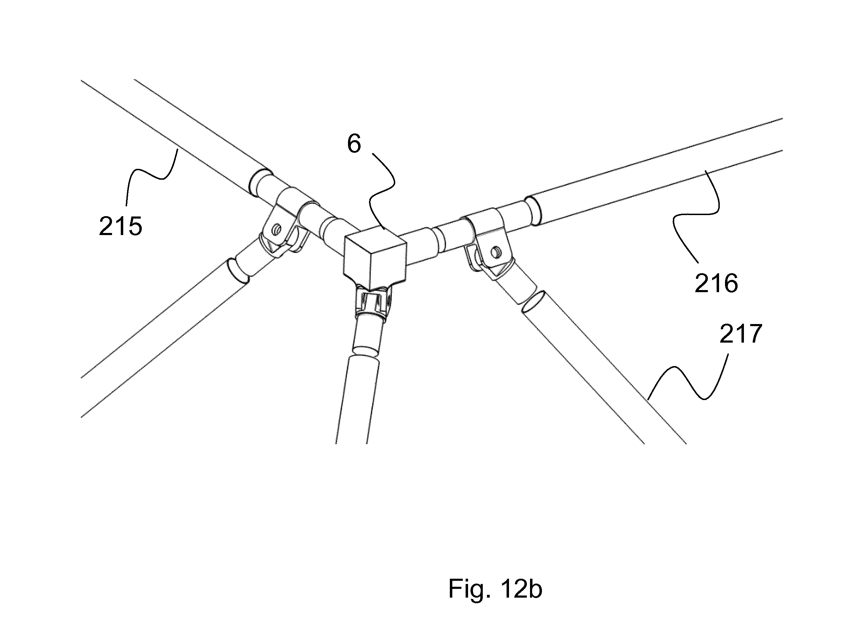

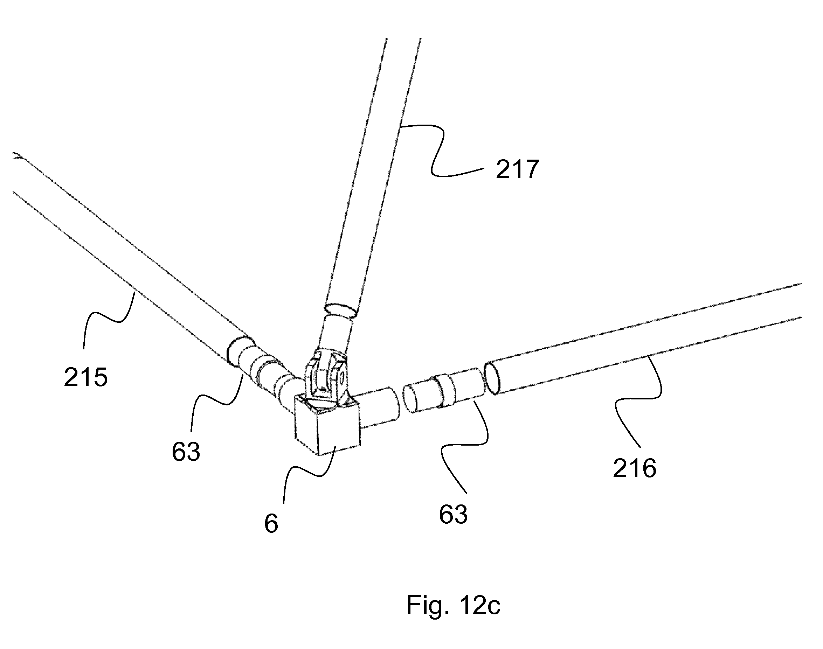

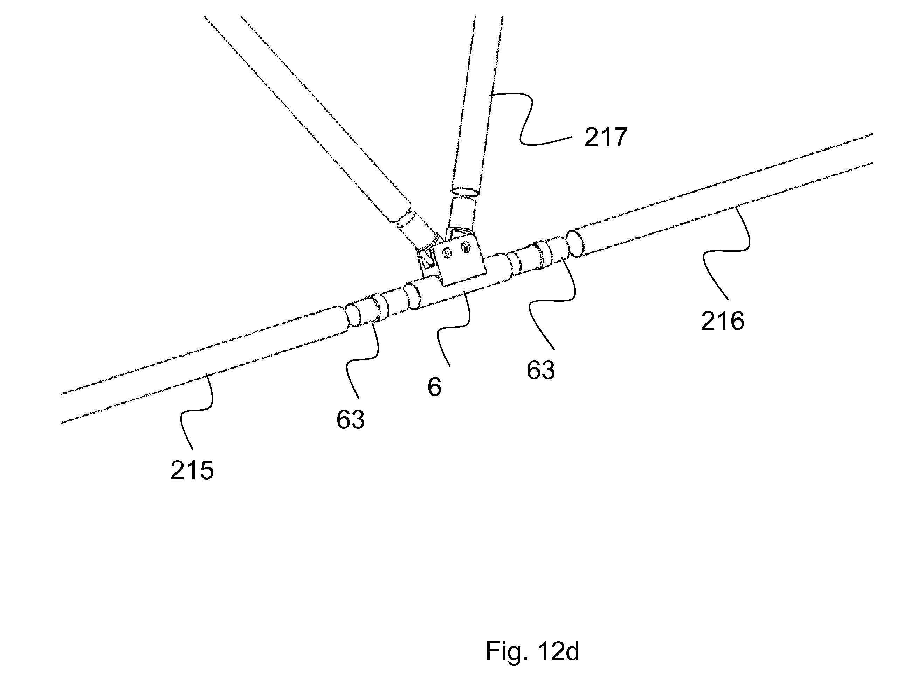

Figures 12a to 12d show a variant embodiment of the fixing joints, with different numbers and orientations of the tubular elements.

These joints have all the characteristics as described above and, additionally, the connection elements 6 are not only provided at the corners of the base, but also along straight parts.

## Claims

1. An operating machine composed of two parts, i.e. a first upper operating part (1) and a second support base part (2), the first operating part (1) comprising motorized operating units which perform workpiece processing movements,
said first operating part (1) being supported by said second support base part (2),
**characterized in that**
said second support base part (2) is composed of a plurality of modular lattice elements (21) which are or can be joined together to form a three-dimensional lattice structure,
each modular element (21) being formed of a plurality of tubular elements, which are joined together to form a polygonal frame,
said three-dimensional lattice structure being obtained by fixing one edge and/or side and/or vertex of one of said polygonal frames (21) to one edge and/or side and/or vertex of another of said polygonal frames (21).

2. An operating machine as claimed in claim 1, wherein said polygonal frames (21) and/or said tubular elements are joined together by bonding using a structural adhesive.

3. An operating machine as claimed in claim 1 or 2, wherein said polygonal frames (21) are joined together using fixing joints (4) having interface surfaces adapted to interact with the sections of said tubular elements.

4. An operating machine as claimed in one or more of the preceding claims, wherein each of said polygonal frames (21) is geometrically similar to the rest of said polygonal frames (21), i.e. each of said polygonal frames (21) is scaled to the sizes of the rest of said polygonal frames.

5. An operating machine as claimed in one or more of the preceding claims, wherein said support frame (2) is composed of two three-dimensional lattice structures, i.e. a lower lattice structure and an upper lattice structure,
both lattice structures being formed of a plurality of triangular frames (21) joined together by their base vertices (214), so that each lattice structure has a polygonal base consisting of the joined base tubular elements (211) of each triangular frame (21) and has posts consisting of the inclined tubular elements (212) of each triangular frame,
said two lattice structures being joined together so that the bases of the lattice structures are at opposite sides of said support base (2), in the vertical direction, with reference to the vertical center axis of said support base.

6. An operating machine as claimed in one or more of the preceding claims, wherein said two lattice structures are fixed together so that the vertices of the polygonal base (214) of said upper lattice structure are connected to corresponding joined vertices (213) of the inclined tubular elements (212) of said lower lattice structure,
said bases of said two lattice structures being arranged in parallel relation at opposite sides of said support base (2), in the vertical direction, with reference to the vertical center axis of said support base,
and said joined vertices (213) of the oblique tubular elements (212) of said upper lattice structure are joined together by means of a plate (3), which plate (3) acts as a support for at least part of said motorized operating units,
said triangular frames (21) that form said upper lattice structure having the joined vertices (213) of their respective oblique tubular elements (212), so that said vertices converge toward said plate (3).

7. An operating machine as claimed in one or more of the preceding claims, wherein both of said lattice structures are composed of four triangular frames (21) so that the bases of said two lattice structures have a rectangular, particularly square shape.

8. An operating machine as claimed in claim 1, wherein said three-dimensional lattice structure consists of a central part (31) and a peripheral part (32),
said central part (31) being formed as a tower by arranging a plurality of modular elements side by side, which modular elements have a lattice form, i.e. each modular element consisting of two elongate elements (311) arranged in parallel and spaced relationship along the vertical center axis of said base, at least one connection element (312) being provided to connect said two elongate elements (311),
said modular elements being arranged side by side along said elongate elements (311)
and said peripheral part (32) being formed of at least one stabilizing module consisting of a trapezoidal element extending outwards relative to said central part (31).

9. An operating machine composed of two parts, i.e. a first operating part (1) and a second support base part (2), the first operating part (1) comprising at least one motorized operating unit which performs workpiece processing movements,
said first operating part (1) being supported by said second support base part (2),
**characterized in that**
said support base consists of a support frame (4) comprising at least two columns (41) interconnected by a superstructure (42),
said first operating part being supported by said second support base part (2) so that said first operating part hangs from said support frame, particularly from said superstructure,
wherein said first operating part comprises at least one workpiece processing member and at least one support frame for said member, which frame is stationary or movable relative to the base,
said support base and/or said support frame of said member having the structural and construction characteristics of the base as claimed in one or more of the preceding claims.

10. A support base (2) for operating machines, **characterized in that** it is composed of a plurality of modular lattice elements (21) which are or can be joined together to form a three-dimensional lattice structure,
each modular element being formed of a plurality of tubular elements, which are joined together to form a polygonal frame,
said three-dimensional lattice structure being obtained by fixing one edge and/or side and/or vertex of one of said polygonal frames to one edge and/or side and/or vertex of another of said polygonal frames.

11. A support base (2) for operating machines as claimed in claim 10, wherein said modular elements are joined together by bonding, using a structural adhesive.

12. A support base (2) as claimed in claim 10 or 11, wherein said modular elements have the characteristics as claimed in one or more of the preceding claims from 1 to 9.

13. An operating machine composed of two parts, i.e. a first operating part and a second support base part,
the first operating part comprising at least one motorized operating unit which performs workpiece processing movements and is supported by the second base part;
the motorized operating unit comprising at least one workpiece processing member and at least one support frame for said member, which frame is stationary or movable relative to the base;
**characterized in that**
said frame is formed according to one or more of the general characteristics and the special characteristics of one or more of the embodiments of the base as described above.

14. An operating machine as claimed in claim 13, **characterized in that** the frame has the structural and construction characteristics of the base as claimed in one or more of the preceding claims.

15. An operating machine as claimed in one or more of the preceding claims, wherein said fixing joints (4) connect the end of a first tubular element (215) to the end of a second tubular element (216) through a connection element (6), which connection element (6) is connected by its two end sides to said first tubular element and said second tubular element,
said connection element (6) having a fixing member (62) for connection of at least one third tubular member (217), such that said third tubular element (217) is moved relative to said first (215) and said second (216) tubular elements with at least one degree of freedom.

16. An operating machine as claimed in one or more of the preceding claims, wherein said connection element (6) is connected by its two end sides to said first tubular element and to said second tubular element, through a first fixing member (61) and a second fixing member (62) respectively,
said first (61) or second (62) fixing member allowing connection of at least one third tubular element (217), such that said third tubular element (217) is moved relative to said first (215) and said second (216) tubular elements with at least one degree of freedom.

17. An operating machine as claimed in claim 16, wherein said first fixing member (61) is composed of at least two half-collars (611), which are clamped together to form an inner clamping surface for fixing an end side of said connection element (6) to the end of a first tubular element (215),
whereas said second fixing member (62) is composed of two jaws (621), which are clamped together to form an inner clamping surface for fixing an end side of said connection element (6) to the end of a second tubular element (216),
the two clamped jaws (621) also forming a hemispherical seat for facilitated reception of a spherical head (622), which spherical head (622) is connected by bonding to said third tubular element.

18. An operating machine as claimed in claim 16, wherein said first fixing member (61) is composed of two half-collars (611), which are clamped together to form an inner clamping surface for fixing an end side of said connection element (6) to the end of a first tubular element (215),
whereas said second fixing member (62) is composed of two jaws (623), which are clamped together to form an inner clamping surface for fixing an end side of said connection element (6) to the end of a second tubular element,
each jaw extending in the vertical direction such that, when said two jaws (623) are clamped together they form a seat for receiving an end element (624) connected by bonding to said third tubular element (217),
said end element (624) and said jaws forming a hole for receiving a pin or a screw, to prevent any translational motion of said end element (624) relative to said two jaws (623).

19. An operating machine as claimed in one or more of the preceding claims, wherein at least the first (215) and/or the second (216) tubular elements and/or said inner joint (63) and/or said half-collars (611) and/or said jaws (623) are fixed to the end sides of said connection element (61) by bonding.
